# EUROPEAN PATENT SPECIFICATION

(11) **EP 1 117 602 B1**
(45) Date of publication and mention of the grant of the patent: **12.03.2003**
(21) Application number: 99931329.9
(22) Date of filing: 24.06.1999
(51) Int. Cl.: B65G 11/02, B65G 19/30, B65G 47/26

(54) **APPARATUS AND METHOD FOR HANDLING RETURNABLE BOTTLES**
VORRICHTUNG UND VERFAHREN ZUR HANDHABUNG VON RÜCKGABEFLASCHEN
APPAREIL ET PROCEDE DE MANIPULATION DE BOUTEILLES CONSIGNEES

(30) Priority: 02.07.1998 FI 981527
(43) Date of publication of application: 25.07.2001
(73) Proprietor: OY TOMRA AB, 01510 Vantaa (FI)
(72) Inventor: OLLIKAINEN, Juha, FIN-02320 Espoo (FI)
(74) Representative: Leson, Thomas Johannes Alois, Dipl.-Ing.
(86) International application number: FI9900558
(87) International publication number: WO00001597

(56) References cited:
- US-A- 5 154 276

## Description

Handling systems of returnable bottles are known in the art (US 5 154 276 A), in which systems a returnable bottle can be dropped from a shop space above to a store space underneath through a separate dropping pipe. Such apparatus designs are known in the art in which the space underneath is provided with a rotating brush means, wherewith the returnable bottle can be moved from the space underneath forward onto a separate belt conveyor. In addition to being used as a transfer means, the rotating brush means also serves as a retarding means in dropping the returnable bottle, thus lessening the bumping of the bottle against the location underneath.

Also known in the art are retarding mechanisms in the dropping pipe, such as retarding wheels, with the aid of which the dropping motion of the bottle falling down in the dropping pipe is retarded. Also damping materials in underneath locations are known in the art. For a damping material, such as expanded plastic may serve as an example.

However, the above state-of-art apparatus designs do not provide sufficient reliability in handling a returnable bottle. The risk is the breaking of the bottle and consequently, an interruption in the operation of the entire mechanism. Neither are the apparatus designs of the present invention appropriate for use in all instances to be connected directly to a returnable bottle automation because their handling speeds are not sufficient.

However, the apparatus designs known in the art have not sufficently enough been able to dampen the dropping of the bottle. A consequence thereof has been breaking of bottles.

In the present application, an enhancement is proposed for the problems above. As taught by the invention, a novel handling apparatus for returnable bottles has been formed, with which the returnable bottle can be dropped from a space above to a space underneath via a dropping pipe. As taught by the invention, the dropping pipe is disposed to be in oblique position relative to the vertical direction, and such dropping pipe is advantageously used which comprises straight walls and an angle therebetween, so that the returnable bottle can be guided to pass via both walls and furthermore, with the aid of gravity to be depressed at a downward angle in the dropping space. As taught by the invention, the dropping pipe is provided with a retarding mechanism, and furthermore, the end of the dropping pipe is provided with a separate turning unit, wherewith the returnable bottle is turned into vertical position while on top of the transfer belt. Advantageously, the turning unit is a means provided with straight sides and an angle therebetween, so that the walls have been positioned to be in the conveyance direction of the conveyor in the manner in the fashion that when the belt is turned on, the walls support the returnable bottle upon the belt and prevent it from being overturning. Preferably, separate support means, such as support gates, are used in conjunction with the turning unit, with the aid of which the returnable bottle is pressed tightly against a corner in the turning unit.

The compatibility of the operation of the retarding mechanism, the turning unit and feeding means above the dropping pipe of returnable bottles has been secured by using a light source detector system, with which the entry of a bottle dropped in the station is detected, and further, its dropping to the conjunction with the turning unit. Advantageously, two light source detector means are used: the first ones at the mouth of the dropping pipe and the two other means in conjunction with the turning unit.

The apparatus of the invention and the method in handling returnable bottles are characterized in what is presented in the claims.

The invention is described below, reference being made to certain advantageous embodiments of the invention depicted in the figures of the drawings, whereto, however, the invention is not intended to be exclusively restricted.

In Figure 1A, the apparatus of the invention is presented as a lateral image, and on the basis of Fig. 1A, an advantageous use of the means of the invention is described for moving returnable bottles from a shop space above to a store space underneath.

Figure 1B shows the apparatus in the direction of arrow K₁ in Figure 1A.

Figure 1C shows an exchanger in conjunction with the inlet pipe, disposed to move the end of the inlet pipe into alternative positions to be in conjunction with two different dropping pipes.

Figure 2A presents the apparatus of the invention in lateral view.

Figure 2B presents the apparatus of Figure 2A in the direction of arrow K₂ in Figure 2A.

Figure 3A demonstrates the retarding mechanism in the dropping pipe.

Figure 3B shows section I―I in Figure 3A.

Figure 4A presents a lower turning unit in conjunction with the bottle handling apparatus of the invention, the turning unit being turned into vertical position while supported by its joint.

Figure 4B shows section II―II in Figure 4A.

Figure 4C presents guidance of a beam of light for detecting a returnable bottle dropped through the apertures in the wall structure as in Figure 4A in conjunction with the turning unit 20.

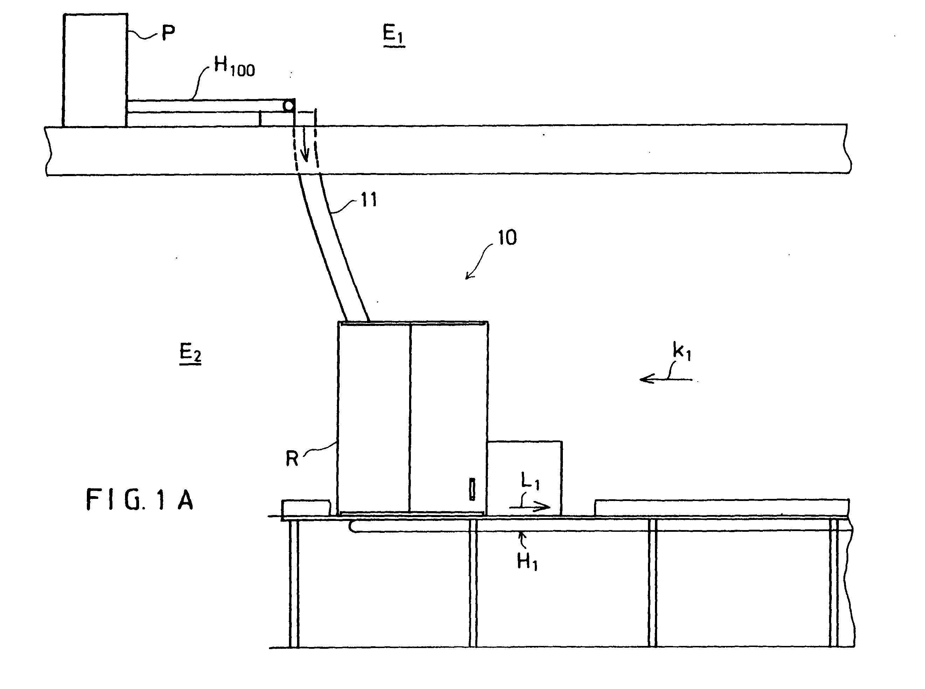

Figure 1A presents a general image of the apparatus of the invention, in which from a shop space E₁ above, returnable bottles are dropped to a store space E₂ underneath with the aid of the apparatus 10 of the invention. The shop space E₁ above comprises advantageously a returnable bottle automation P receiving returnable bottles, from the transfer belt H₁₀₀ of which a returnable bottle is transferred into an inlet pipe 11 and therethrough into a dropping pipe 13a₁ or 13a₂. The dropping pipes 13a₁, 13a₂ have been placed next to one another, and in addition, they have been positioned, concerning the longitudinal axes, relative to vertical direction Y₁, in oblique angle α. From the inlet pipe 11 the returnable bottle is guided with the aid of an exchanger 12 either into the dropping pipe 13a₁ or the dropping pipe 13a₂.

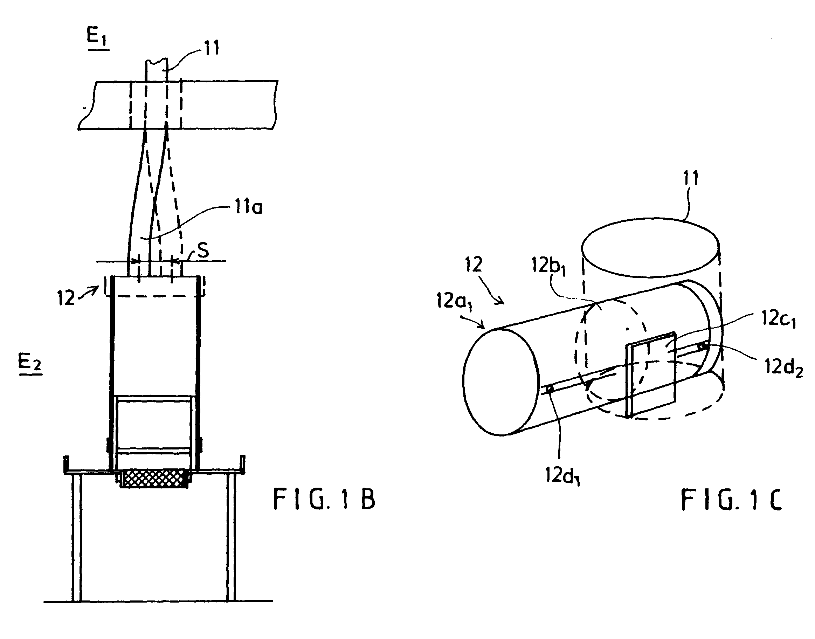

Figure 1B shows the apparatus design of Figure 1A when viewed in direction of arrow K₁ of Figure 1A. In Figure 1B, an alternative position of the inlet pipe 11 is shown in broken lines. The exchanger 12 moves the end 11a of the inlet pipe 11 into alternative positions to be either in conjunction with the dropping pipe 13a₁ or the dropping pipe 13a₂. The other alternative position of the end 11a of the inlet pipe 11 is marked with broken lines. The transfer distance is marked with S.

Figure 1C shows the exchanger 12 in principle image.

The exchanger 12 comprises a compressed-air cylinder 12a₁ and a piston 12b₁ therein, whereto the body 12c₁ has been mounted. An inlet pipe 11 has been further joined to the body 12c₁, being moved with the aid of the piston 12b₁ sidewise into either end position of the cylinder 12a₁, in which the dropping pipe 13a₁ or 13a₂ is located. The cylinder 12a₁ comprises a magnet detector 12d₁ in its conjunction, detecting the locations of the piston 12b₁ and the location of the end 11a of the inlet pipe 11 connected thereto.

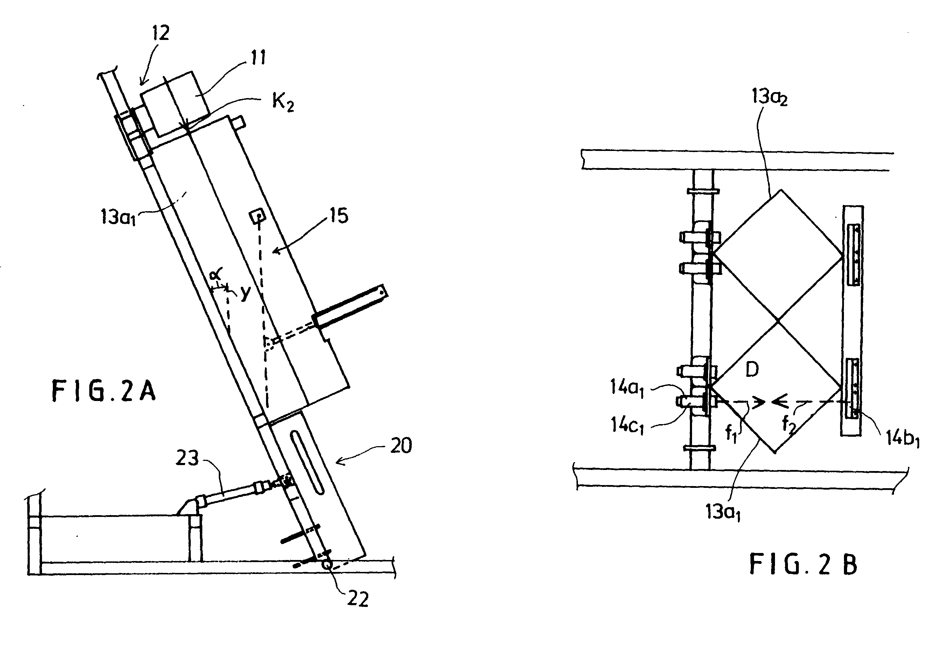

Figure 2A displays the apparatus 10 of the invention in lateral view. The exchanger 12 has been disposed to the inlet pipe 11 and it has been arranged to move the end of the inlet pipe 11 to be alternatively in conjunction with either the dropping pipe 13a₁ or the other dropping pipe 13a₂ adjacent thereto as shown in the figure. Via the dropping pipe 13a₁,13a₂ the returnable bottle is moved further to be in conjunction with the lower turning apparatus 20.

Each dropping pipe 13a₁, 13a₂ comprises equivalent arrangements in handling returnable bottles. The dropping pipe 13a₁,13a₂ comprises a retarding mechanism 15 moved with an actuator 16, preferably with a cylinder means. A response part 17 is connected to the shaft 16a of the cylinder means 16, being movable in the dropping pipe 13a₁,13a₂ to be in the way of the bottle to retard and to stop its dropping. The cylinder 16 is advantageously a pneumatic cylinder wherewith sufficient damping is achieved. Within the scope of the invention, an embodiment is also conceivable, with the aid of which merely the dropping of the bottle is retarded with the retarding mechanism 15. The retarding mechanism 15 can therefore stop either entirely the dropping movement of the bottle or merely to retard it.

The end of the dropping pipe 13a₁, 13a₂ is provided with a turning unit 20, comprising an actuator 23 for turning the turning unit 20 supported by a joint 22 from an oblique position receiving the bottle into vertical position upon the belt H₁.

Figure 2B shows the apparatus of Figure 2A in the direction of arrow K₂. As shown in the figure, both the dropping pipe 13a₁ and 13a₂ are preferably made of square cross-sections in a corner D of which the returnable bottle is placed on the strength of gravity. A pipe with round cross-section may also be used. A beam of light from a light source 14a₁ is directed via a mirror 14b₁ to a detector 14c₁ and back to the adjacency of the light source 14a₁, and the entry of the bottle in the dropping pipe 13a₁ is detected. The pipes 13a₁ and 13a₂ are provided with two adjacent detection means. Respectively, the entry of a bottle in the dropping pipe 13a₂ into the conjunction of the dropping pipe is detected. A beam of light is directed via the apertures f₁,f₂ of the dropping pipe 13a₁,13a₂. Instead of a detection means based on a beam of light, also other detectors such as ultrasonic detectors can be used.

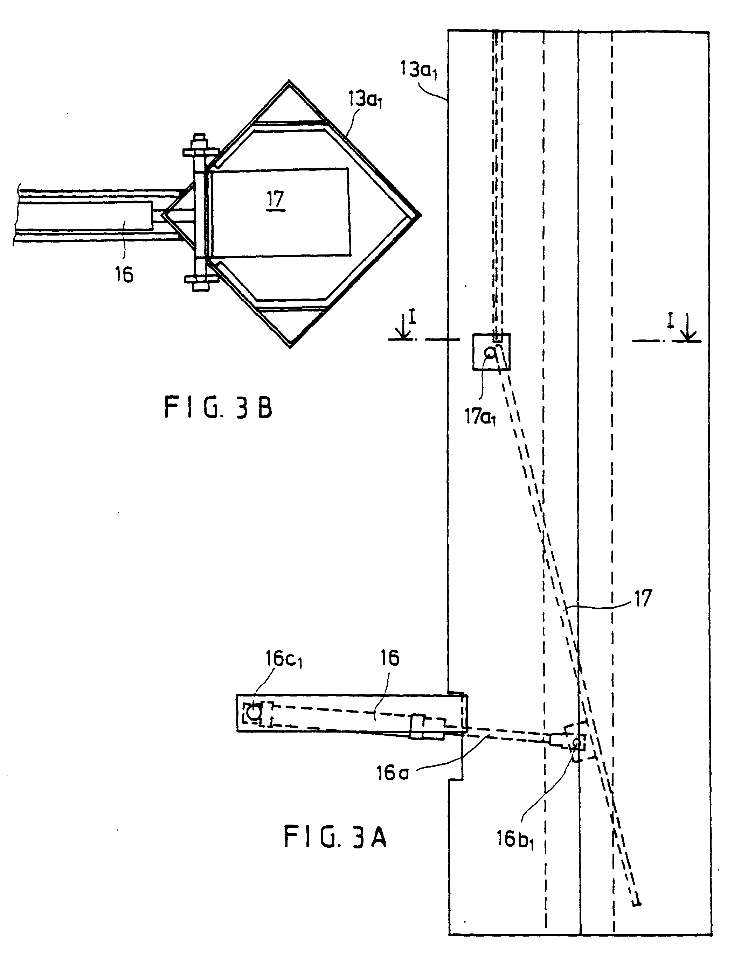

Figure 3A displays a retarding mechanism 15 in the dropping pipe 13a₁, being moved with an actuator 16, advantageously with a cylinder means. On the shaft 16a of the cylinder means 16, a mobile response part 17 is joined, which can be made to close transversely the dropping route in the dropping pipe 13a₁,13a₂. Each dropping pipe 13a₁,13a₂ comprises a separate retarding mechanism 15 for the returnable bottle dropped therethrough. The response part 17 has been articulated to turn in a joint 17a₁ and the cylinder 16 has been articulated with a joint 16b₁ in the cylinder shaft to the response part 17 and from the cylinder body with a joint 16c₁ to the mechanism body R.

Figure 3B shows section I―I in Figure 3A. In the presentation of the figure, the response part 17 is in a position receiving a bottle and damping its dropping. With the aid of the response part 17 the dropping of the bottle can be stopped entirely.

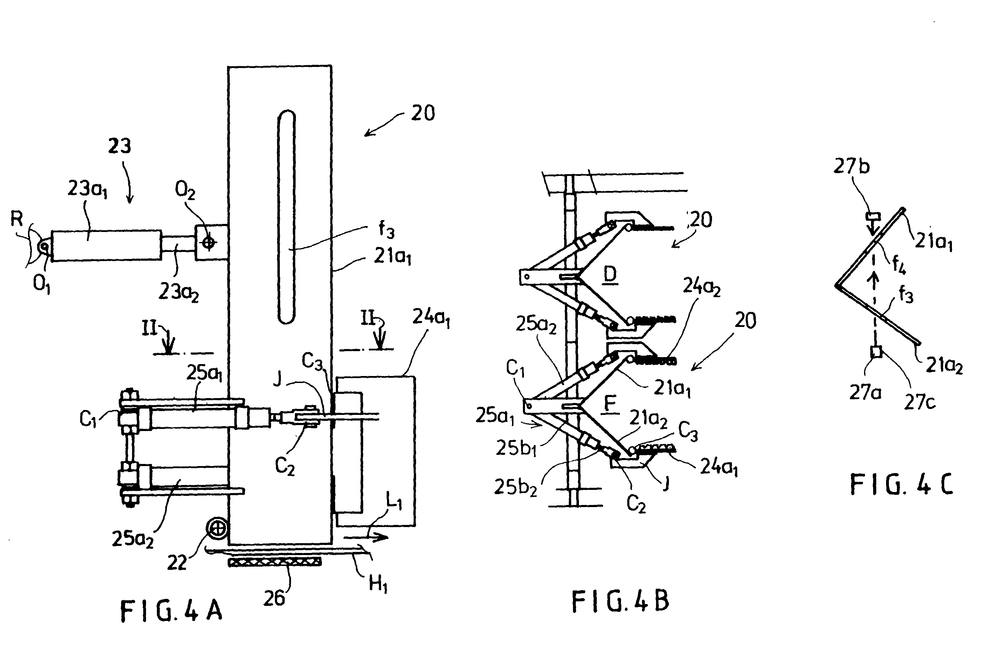

Figure 4A shows a turning unit 20 at the end of the dropping pipe. The ends of each dropping pipe 13a₁,13a₂ are provided with individual turning units 20, turned with an actuator 23 supported by joint 22, preferably with a pneumatic cylinder. The turning unit may also be another actuator, for instance an electric solenoid. Hence, the turning unit 20 can be positioned with the actuator 23 into vertical position and back into oblique position relative to vertical level; in angle α, which is the same as the angle of bevel of the dropping pipe 13a₁,13a₂. In the oblique position, said position corresponding to the position of the dropping pipe 13a₁,13a₂, the turning unit 20 receives a returned bottle from the dropping pipe 13a₁ or 13a₂. Using the actuator 23, the bottle dropped on the belt H₁ is raised into vertical position. The body of the turning unit 20 comprises walls 21a₁,21a₂ being at 90° to each other, so that the returnable bottle is placed in a corner D between the walls on the strength of gravity when it is dropped from the dropping pipe 13a₁,13a₂ upon the turning unit 20. The turning unit 20 is then turned into vertical position with the actuator 21.

As shown in Figure 4A, gates 24a₁,24a₂ movable with actuators 25a₁,25a₂, advantageously with pneumatic cylinders, are provided to be in conjunction with walls 21a₁,21a₂, said gates being made to close the space between the walls 21a₁,21a₂ and to direct the returnable bottle into a corner D between the walls 21a₁,21a₂ when the returnable bottle was dropped into the dropping space F between the walls 21a₁,21a₂. Each gate 24a₁,24a₂ is driven by an actuator of its own 25a₁ or 25a₂.

The actuator 23 is advantageously also a cylinder means articulated from the cylinder body 23a₁ with a joint O₁ on the machine frame R and from the cylinder shaft 23a₂ articulated with a joint O₂ onto the walls 21a₁,21a₂. For actuator 23, also an electric solenoid may be used.

As shown in Figure 4B, the space F between the walls 20a₁,20a₂ opens in the movement direction L₁ of the upper conveyor of the belt H₁. Thereby, when the belt is set on, the returnable bottle is supported effectively on the walls 21a₁,21a₂ in the corner D therebetween. The cylinder body 25b₁ of the actuator 25 has been articulated at a joint C₁ on the apparatus body 21a₁,21a₂, and the end of the piston shaft 25b₂ of the actuator 25a₁ at a joint C₂ to the intermediate shaft j connected to the gate 24a₁. The gate 24a₁ has been articulated at a joint C₃ to the wall 21a₁. Respectively, the attachment arrangement and the actuator arrangement of the other support gate 24a₂ is identical.

In addition, Figure 4C shows the damping unit 26 underneath the belt H₁. Advantageously, the damping unit 26 is made of expanded plastic.

Figure 4C shows the bottle detection equipment in association with the turning unit 20. A beam of light is sent from a light source 27a to a mirror 27b. The beam of light reflected from the mirror 27b is received with a detector 27c. The beam of light has been made to pass through the plate apertures f₃,f₄, as demonstrated in Figure 4C. After the returnable bottle has been detected, the exchanger 12 can thereafter be guided via the central unit so that it moves the inlet pipe 11 to be in association with the other dropping pipe 13a₁,13a₂.

## Claims

1. An apparatus for receiving returnable bottles from a space above to a space underneath, **characterized in that** the apparatus receiving a returnable bottle is a turning unit (20) which is turnable from an oblique position relative to vertical level into a vertical position by means of an actuator (23), and that the turning unit (20) comprises walls (21a₁, 21a₂) and a gate means (24a₁, 24a₂), whereby the returnable bottle is kept pressed by means of the gate means (24a₁, 24a₂) against the walls (21a₁, 21a₂) of the turning unit when the turning unit (20) is lifted into a vertical position, and an actuator (25a₁, 25a₂) for moving the gate means (24a₁, 24a₂).

2. Apparatus according to claim 1, **characterized in that** the turning unit (20) comprises a joint (22), supported by which the turning unit (20) is turnable, and that an actuator (23) is provided, advantageously a cylinder means, with the aid of which the turning unit (20) is turned into vertical position from an oblique position relative to vertical direction.

3. Apparatus according to claim 1 to 2, **characterized in that** the turning unit (20) comprises walls (21a₁, 21a₂), in the corner (D) wherebetween the returnable bottle is settled, while the turning unit (20) is in a position receiving the bottle, and that the turning unit (20) comprises in association therewith gates (24a₁, 24a₂) moved with the actuator (25a₁, 25a₂), with the aid of which the returnable bottle is kept pressed against the walls (21a₁, 21a₂) when the turning unit (20) is lifted into vertical position.

4. Apparatus according to any one of the preceding claims, **characterized in that** the dropping pipe (13a₁) comprises a square or rectangular cross-section, in a corner (D) whereof the returnable bottle is by means of gravity settled as it falls in said dropping pipe and that the dropping pipe comprises inside thereof a retarding mechanism (15) driven with a cylinder means (16) so that a mobile response part (17) can be made to close the dropping pipe in order to slow down the dropping of the returnable bottle.

5. Apparatus according to any one of the preceding claims, **characterized in that** the apparatus comprises means to detect the traveling of the returnable bottle at the upper end of the dropping pipe (13a₁, 13a₂), such as a light source (14a) generating a beam of light and a detector (14c) receiving the beam of light, with the aid of which the traveling of the returnable bottle into the dropping pipe (13a₁, 13a₂) is detected.

6. Apparatus according to any one of the preceding claims, **characterized in that** the turning unit (20) comprises in association therewith a source of light (27a) and a mirror (27b) and a detector (27c), wherewith a returnable bottle dropped in the space between the walls (21a₁, 21a₂) of the turning unit (20) is detected when a beam of light has been directed to travel through the apertures (21b₁, 21b₂) of the walls (21a₁, 21a₂).

7. Apparatus according to any one of, the preceding claims, **characterized in that** it comprises two dropping pipes (13a₁, 13a₂) in parallel and two turning units (20) at the ends thereof, and **in that** the apparatus comprises an exchanger (12) wherewith a returnable bottle dropped from the inlet pipe (11) is guided alternately either into the dropping pipe (13a₁) or (13a₂).

8. A method in handling returnable bottles by means of the apparatus according to any of the preceding claims, **characterized in that** in the method a returnable bottle is guided to the turning unit (20) into a space (F) between the walls (21a₁, 21a₂) thereof and against said walls, and that the turning unit (20) is then guided so that it raises into vertical position, whereby the turning unit (20) turns the returnable bottle from oblique position upright, and **in that** the returnable bottle is directed to be upright on top of a transfer belt (H₁) and that the gates (24a₁, 24a₂) in association with the turning unit (20) are so guided that the returnable bottle is thereafter enabled to be transferred by the belt (H) away from the space (F) between the walls (21a₁, 21a₂) of the turning unit (20).

## Patentansprüche

1. Vorrichtung zum Empfangen von Rückgabeflaschen von einem obenliegendem Raum zu einem darunter liegenden Raum,
**dadurch gekennzeichnet, dass**
die eine Rückgabeflasche empfangende Vorrichtung eine Dreheinheit (20) ist, die mittels einem Stellglieds (23) von einer relativ zu einem vertikalen Niveau geneigten Stellung in eine vertikale Stellung drehbar ist und dass die Dreheinheit (20) Wände (21a₁, 21a₂) und eine Toreinrichtung (24a₁, 24a₂) hat, wodurch die Rückgabeflasche mittels der Toreinrichtung (24a₁, 24a₂) gegen die Wände (21a₁, 21a₂) der Dreheinheit gepresst bleibt wenn die Dreheinheit (20) in eine vertikale Stellung gehoben wird, und ein Stellglied (25a₁, 25a₂) zum Bewegen der Toreinrichtung (24a₁, 24a₂) hat.

2. Vorrichtung gemäß Anspruch 1,
**dadurch gekennzeichnet, dass**
die Dreheinheit (20) ein Gelenk (22) hat, wobei die Dreheinheit (20) durch dieses gestützt drehbar ist und dass ein Stellglied (23) vorgesehen ist, bevorzugter Weise eine Zylindereinrichtung, mit dessen Hilfe die Dreheinheit (20) von einer relativ zu der Vertikalrichtung geneigten Stellung in eine vertikale Stellung gedreht wird.

3. Vorrichtung gemäß Anspruch 1 bis 2,
**dadurch gekennzeichnet, dass**
die Dreheinheit (20) Wände (21a₁, 21a₂) hat, wobei die Rückgabeflasche in der dazwischenliegenden Ecke (D) angesiedelt ist, während die Dreheinheit (20) in einer die Flasche empfangenden Stellung ist, und dass die Dreheinheit (20) damit in Verbindung Tore (24a₁, 24a₂) hat, die mit dem Stellglied (25a₁, 25a₂) bewegt werden, mit deren Hilfe die Rückgabeflasche gegen die Wände (21a₁, 21a₂) gepresst bleibt, wenn die Dreheinheit (20) in die vertikale Stellung angehoben wird.

4. Vorrichtung gemäß einem der vorstehenden Ansprüche,
**dadurch gekennzeichnet, dass**
die Einwurfröhre (13a₁) einen quadratischen oder rechteckigen Querschnitt hat, in dessen Ecke (D) die Rückgabeflasche mittels Schwerkraft angesiedelt ist, wenn sie in die Einwurfröhre fällt, und dass die Einwurfröhre in ihrem Inneren einen mit einer Zylindereinrichtung (16) angetriebenen Verzögerungsmechanismus (15) hat, so dass ein bewegliches Reaktionselement (17) veranlasst werden kann, die Einwurfröhre zu schließen, um das Einwerfen der Rückgabeflaschen zu verlangsamen.

5. Vorrichtung gemäß einem der vorstehenden Ansprüche,
**dadurch gekennzeichnet, dass**
die Vorrichtung Einrichtungen zum Ermitteln des Fahrens der Rückgabeflasche an dem oberen Ende der Einwurfröhre (13a₁, 13a₂) hat, wie zum Beispiel eine einen Lichtstrahl erzeugende Lichtquelle (14a) und einen den Lichtstrahl empfangenden Detektor (14c) hat, mit dessen Hilfe das Fahren der Rückgabeflasche in die Einwurfröhre (13a₁, 13a₂) ermittelt wird.

6. Vorrichtung gemäß einem der vorstehenden Ansprüche,
**dadurch gekennzeichnet, dass**
die Dreheinheit (20) in Verbindung damit eine Lichtquelle (27a) und einen Spiegel (27b) und einen Detektor (27c) hat, mit denen eine in einem Raum zwischen den Wänden (21a₁, 21a₂) der Dreheinheit (20) eingeworfene Rückgabeflasche ermittelt wird, wenn ein Lichtstrahl so gerichtet wurde, dass er durch die Öffnungen (21b₁, 21b₂) der Wände (21a₁, 21a₂) hindurchfährt.

7. Vorrichtung gemäß einem der vorstehenden Ansprüche,
**dadurch gekennzeichnet, dass**
sie zwei parallele Einwurfröhren (13a₁, 13a₂) und zwei Dreheinheiten (20) an deren Enden hat, und dadurch, dass die Vorrichtung einen Wechsler (12) hat, mit dem eine von der Einlassröhre (11) eingeworfene Rückgabeflasche wahlweise entweder in die Einwurfröhre (13a₁) oder (13a₂) geführt wird.

8. Verfahren zum Handhaben von Rückgabeflaschen mittels der Vorrichtung gemäß einem der vorstehenden Ansprüche,
**dadurch gekennzeichnet, dass**
in dem Verfahren eine Rückgabeflasche zu der Dreheinheit (20) in einen Raum (F) zwischen den Wänden (21a₁, 21a₂) davon und gegen Seitenwände geführt wird und dass die Dreheinrichtung (20) dann so geführt wird, dass sie in die vertikale Stellung angehoben wird, wodurch die Dreheinheit (20) die Rückgabeflasche von ihrer schrägen Stellung aufrecht dreht und dadurch, dass die Rückgabeflasche so gelenkt wird, dass sie an dem Anfang eines Förderbands (H₁) aufrecht ist und dass die Tore (24a₁, 24a₂) in Verbindung mit der Dreheinheit (20) so geführt werden, dass die Rückgabeflasche danach in der Lage ist, durch das Band (H) weg von dem Raum (F) zwischen den Wänden (21a₁, 21a₂) der Dreheinheit (20) versetzt zu werden.

## Revendications

1. Appareil pour recevoir des bouteilles pouvant être retournées, qui chutent depuis un tuyau de chute (13a₁, 13a₂), **caractérisé en ce que** l'appareil recevant une bouteille pouvant être retournée est une unité tournante (20) qui peut être tournée depuis une position oblique par rapport à un niveau vertical dans une position verticale à l'aide d'un dispositif d'actionnement (23), et **en ce que** l'unité tournante (20) comprend des parois (21a₁, 21a₂) et des moyens de volet (24a₁, 24a₂), moyennant quoi la bouteille pouvant être retournée est maintenue par pression à l'aide des moyens de volet (24a₁, 24a₂) contre les parois (21a₁, 21a₂) de l'unité tournante lorsque l'unité tournante (20) est soulevée dans une position verticale.

2. Appareil selon la revendication 1, **caractérisé en ce que** l'unité tournante (20) comprend une articulation (22) au moyen de laquelle l'unité tournante (20) peut tourner, et **en ce qu'**un dispositif d'actionnement (23) est prévu, de manière avantageuse sous forme d'un moyen formant cylindre, à l'aide duquel l'unité tournante (20) est tournée dans la position verticale depuis une position oblique par rapport à la direction verticale.

3. Appareil selon la revendication 1 ou la revendication 2, **caractérisé en ce que** l'unité tournante (20) comprend des parois (21a₁, 21a₂), entre le coin (D) desquelles la bouteille pouvant être retournée est installée, tandis que l'unité tournante (20) se trouve dans une position de réception de la bouteille, et **en ce que** l'unité tournante (20) comprend en association avec celles-ci des volets (24a₁, 24a₂) déplacés à l'aide d'un dispositif d'actionnement (25a₁, 25a₂), au moyen duquel la bouteilles pouvant être retournée est maintenue par pression contre les parois (21a₁, 21a₂) lorsque l'unité tournante (20) est soulevée dans la position verticale.

4. Appareil selon l'une quelconque des revendications précédentes, **caractérisé en ce que** le tuyau de chute (13a₁) présente une section transversale carrée ou rectangulaire, dans le coin (D) de laquelle la bouteille pouvant être retournée est installée par gravité à mesure qu'elle tombe dans ledit tuyau de chute et **en ce que** le tuyau de chute comprend à l'intérieur de celui-ci un mécanisme de retardement (15) entraîné par des moyens formant cylindre (16) de sorte qu'une partie à réponse mobile (17) puisse être amenée à fermer le tuyau de chute afin de ralentir la chute de la bouteille pouvant être retournée.

5. Appareil selon l'une quelconque des revendications précédentes, **caractérisé en ce que** l'appareil comprend des moyens pour détecter le déplacement d'une bouteille pouvant être retournée au niveau de l'extrémité supérieure du tuyau de chute (13a₁, 13a₂), comme une source de lumière (14a) générant un faisceau de lumière et un détecteur (14c) recevant le faisceau de lumière, à l'aide desquels le déplacement de la bouteille pouvant être retournée dans le tuyau de chute (13a₁, 13a₂) est détecté.

6. Appareil selon l'une quelconque des revendications précédentes, **caractérisé en ce que** l'unité tournante (20) comprend en association avec celle-ci une source de lumière (27a) et un miroir (27b) ainsi qu'un détecteur (27c), à l'aide desquels une bouteille pouvant être retournée chutant dans l'espace compris entre les parois (21a₁, 21a₂) de l'unité tournante (20) est détectée lorsqu'un faisceau de lumière a été dirigé à travers les ouverture (21b₁, 21b₂) des parois (21a₁, 21a₂).

7. Appareil selon l'une quelconque des revendications précédentes, **caractérisé en ce qu'**il comprend deux tuyaux de chute (13a₁, 13a₂) en parallèle et deux unités tournantes (20) aux extrémités de ceux-ci, et **en ce que** l'appareil comprend un échangeur (12) à l'aide duquel une bouteille pouvant être retournée chutant depuis le tuyau d'entrée (11) est guidée de manière alternée soit dans le tuyau de chute (13a₁) soit dans le tuyau de chute (13a₂).

8. Procédé de manipulation de bouteilles pouvant être retournées au moyen de l'appareil selon l'une quelconque des revendications précédentes, **caractérisé en ce que** dans le procédé, une bouteille pouvant être retournée est guidée vers l'unité tournante (20) dans un espace (F) entre les parois (21a₁, 21a₂) de celle-ci et contre lesdites parois, et **en ce que** l'unité tournante (20) est ensuite guidée de sorte qu'elle s'élève dans la position verticale, moyennant quoi l'unité tournante (20) tourne la bouteille pouvant être retournée de la position oblique à la verticale, et **en ce que** la bouteille pouvant être retournée est dirigée de manière à se trouver à la verticale au-dessus d'une courroie de transfert (H₁) et **en ce que** les gvolets (24a₁, 24a₂) associées à l'unité tournante (20) sont guidées d'une manière telle que la bouteille pouvant être retournée a ensuite la possibilité d'être transférée par la courroie (H) à distance de l'espace (F) entre les parois (21a₁, 21a₂) de l'unité tournante (20).
